(19) **Europäisches Patentamt / European Patent Office / Office européen des brevets**

(11) **EP 2 757 849 B1**

(12) **EUROPEAN PATENT SPECIFICATION**

(45) Date of publication and mention
of the grant of the patent:
**16.03.2016 Bulletin 2016/11**

(21) Application number: **12843385.1**

(22) Date of filing: **16.10.2012**

(51) Int Cl.:
**H04W 72/12** *(2009.01)*      **H04L 5/00** *(2006.01)*

(86) International application number:
**PCT/CN2012/083014**

(87) International publication number:
**WO 2013/060246 (02.05.2013 Gazette 2013/18)**

(54) **METHOD AND DEVICE FOR MULTICARRIER SCHEDULING**

VERFAHREN UND VORRICHTUNG FÜR MEHRTRÄGERPLANUNG

PROCÉDÉ ET DISPOSITIF DE PLANIFICATION MULTI-PORTEUSES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **27.10.2011 CN 201110331879**

(43) Date of publication of application:
**23.07.2014 Bulletin 2014/30**

(73) Proprietor: **Huawei Technologies Co., Ltd.
Longgang District
Shenzhen, Guangdong 518129 (CN)**

(72) Inventors:
• **QUAN, Wei
Shenzhen
Guangdong 518129 (CN)**

• **CHEN, Yuhua
Shenzhen
Guangdong 518129 (CN)**

(74) Representative: **Pfenning, Meinig & Partner mbB
Patent- und Rechtsanwälte
Theresienhöhe 11a
80339 München (DE)**

(56) References cited:
**WO-A1-2009/120123      WO-A1-2009/154530
WO-A1-2010/048178      WO-A2-2011/084020
WO-A2-2011/085230      WO-A2-2011/090688
CN-A- 101 909 356       CN-A- 102 186 251**

EP 2 757 849 B1

## Description

## TECHNICAL FIELD

The present invention relates to radio communications technologies, and in particular, to a method and a device for multicarrier scheduling.

## BACKGROUND

To increase a peak rate of a user equipment (User Equipment, UE for short), a concept of aggregation of multiple carriers (Carrier Aggregation, CA for short) is introduced into LTE-A. When the UE needs to aggregate multiple carriers for data transmission, a base station (evolved NodeB, eNB for short) is capable of allocating multiple serving cells/component carriers (Component Carrier, CC for short) to the UE, where: one CC is a primary component carrier (Primary Component Carrier, PCC for short), and a cell in which the PCC is located is called a primary cell (Primary Cell, PCell for short); other CCs are secondary component carriers (Secondary Component Carrier, SCC for short), and a cell in which an SCC is located is called a secondary cell (Secondary Cell, SCell for short).

In a heterogeneous network, to avoid interference from a physical downlink control channel (Physical downlink control channel, PDCCH for short), when carrier aggregation is applied in the UE, the PDCCH is not configured or used on all CCs to design data corresponding to the CC. In this case, a function for enabling cross scheduling needs to be configured; that is, a PDCCH on one CC can be used to schedule data transmission of a PDSCH and/or a physical uplink shared channel (Physical uplink shared channel, PUSCH for short) on another CC. The function indicates, by adding a carrier indicator field (Carrier Indicator Field, CIF for short) to the PDCCH, the specified CC on which data is scheduled, and in this case, one PDCCH is capable of scheduling physical resources on only a certain CC. Another method is to perform joint encoding for the PDCCH, in which resource allocation information of multiple CCs is included, which is equivalent to directly combining content of multiple independent PDCCHs onto one large PDCCH. A relatively small number of PDCCHs are available in a current LTE-A system, and neither the independent PDCCHs nor the simple joint encoding for the PDCCH can reduce occupation of PDCCHs effectively. Therefore, when a relatively large number of PDCCHs are required for performing scheduling, the PDCCHs are limited, which affects normal data scheduling and therefore affects data transmission delay.

WO 2009/154530 A1 provides a method, a radio base station and a mobile terminal for allocating resources in a telecommunication network, where communications between the radio base station and the mobile station take place over a plurality of carriers. The method comprises transmitting a resource allocation message comprising one or more bits. Each of the bits corresponds to a number of resource blocks, where the number is determined from the ratio of the aggregate bandwidth of the plurality of carriers divided by the bandwidth of the carrier over which the resource allocation message is sent. The resource allocation message may be transmitted over the PDCCH.

## SUMMARY

According to the present invention, a method for a base station as set forth in claim 1, a method for a user equipment as set forth in claim 5, a base station as set forth in claim 9 and a user equipment as set forth in claim 13 are provided. Embodiments of the invention are claimed in the dependent claims.

Embodiments of the present invention provide a method for multicarrier scheduling that is different from the prior art.

According to a first embodiment of the present invention, a method for multicarrier scheduling is proposed, where the method includes:

sending a multicarrier configuration message to a user equipment UE, where the multicarrier configuration message includes information about multiple first carriers scheduled by using a physical downlink control channel PDCCH command and information about a resource block encoding manner of the first carriers; and
sending the PDCCH command to the UE over a second carrier, where the PDCCH command includes indication information of a resource block available for the UE, so that the UE schedules resources on the multiple first carriers according to the information about the multiple first carriers, the resource block encoding manner, and the indication information;

wherein data multiplexing, encapsulation, transmission and decoding are performed independently for resources on different first carriers, and resources on a same first carrier are considered as a whole for data multiplexing, encapsulation, transmission, and decoding.

In a first implementation of the first embodiment, in the multicarrier configuration message sent to the UE, information about the multiple first carriers comprises: the number of the multiple first carriers; the PDCCH command sent to the UE comprises a carrier indicator field indicating a specified carrier, and the resource block encoding manner is that all the resource blocks on the multiple first carriers are encoded in a unified sequence, wherein the multiple first carriers are carriers that are referenced by the specified carrier indicated by the carrier indicator field in the PDCCH command and are indicated by the number of the first carriers; and in the PDCCH command sent to the UE, the indication information of the resource blocks available for the UE comprises a resource block start code and the number of the resource blocks, so that the UE schedules resources on the multiple first carriers according to the number of the first carriers and the carrier indicated by the carrier indicator field, wherein the resources are defined by the resource block start code and the number of the resource blocks.

In a second implantation of the first embodiment, in the multicarrier configuration message sent to the UE, the information about the multiple first carriers comprises: the number of the first carriers, and the resource block encoding manner is that all the resource blocks on the multiple first carriers are encoded in a unified sequence according to carrier numbers, wherein the multiple first carriers are carriers that are referenced by the second carrier over which the PDCCH command is sent and are indicated by the number of the first carriers; and

in the PDCCH command sent to the UE, the indication information of the resource blocks available for the UE comprises a resource block start code and the number of the resource blocks, so that the UE schedules the resources on the multiple first carriers according to the number of the first carriers and the serial number of the second carrier, wherein the resources are defined by the resource block start code and the number of the resource blocks.

In a third implantation of the first embodiment, in the multicarrier configuration message sent to the UE, the information about the multiple first carriers comprises: serial numbers of the multiple first carriers and the serial number of the second carrier on which the PDCCH command for scheduling the multiple first carriers is located, and the resource block encoding manner is that the resource blocks on each carrier in the multiple first carriers are encoded sequentially and separately; and

in the PDCCH command sent to the UE, the indication information of the resource blocks available for the UE comprises a resource block start code and the number of the resource blocks, so that the UE schedules the resources on the multiple first carriers according to the serial numbers of the first carriers, the resource block start code, and the number of the resource blocks, wherein the resources are defined by the resource block start code and the number of the resource blocks, wherein the second carrier is one of the multiple first carriers.

According to the first, second or thired implementation of the first embodiment, in a fourth implementation, the multicarrier configuration message sent to the UE comprises a multicarrier scheduling enable/disable indication, and in a case when the multicarrier scheduling enable/disable indication is set to enable, the UE is allowed to perform multicarrier scheduling.

According to a second embodiment of the present invention, a method for multicarrier scheduling is proposed, where the method includes:

  receiving a multicarrier configuration message sent by a base station, where the multicarrier configuration message includes information about multiple first carriers scheduled by using a physical downlink control channel PDCCH command and information about a resource block encoding manner of the first carriers;
  receiving the PDCCH command sent by the base station over a second carrier, where the PDCCH command includes indication information of a resource block available for a user equipment UE; and
  scheduling resources on the multiple first carriers according to the information about the first carriers, the resource block encoding manner, and the indication information;
  wherein data multiplexing, encapsulation, transmission and decoding are performed independently for resources on different first carriers, and resources on a same first carrier are considered as a whole for data multiplexing, encapsulation, transmission, and decoding.

In a first implementation of the second embodiment, in the multicarrier configuration message, the information about the multiple first carriers comprises: serial numbers of the multiple first carriers and a serial number of the second carrier on which the PDCCH command for scheduling the multiple first carriers is located, and the resource block encoding manner is that the resource blocks on each carrier among the multiple first carriers are encoded sequentially and separately; and

in the PDCCH command, the indication information of the resource blocks available for the UE comprises a resource block start code and the number of the resource blocks; and

the scheduling the resources on the multiple first carriers according to the information about the multiple first carriers, the resource block encoding manner, and the indication information comprises:

  scheduling the resources on the multiple first carriers according to the serial numbers of the multiple first carriers, the resource block start code, and the number of the resource blocks, wherein the resources are defined by the resource block start code and the number of the resource blocks;

wherein the second carrier is one of the multiple first carriers.

In a second implemtation of the second embodiment, in the multicarrier configuration message, the information about the multiple first carriers comprises: the number of the first carriers, and the resource block encoding manner is that all the resource blocks on the multiple first carriers are encoded in a unified sequence according to carrier numbers, wherein the multiple first carriers are carriers that are referenced by the second carrier over which that the PDCCH command is sent and are indicated by the number of the first carriers; and

in the PDCCH command, the indication information of the resource blocks available for the UE comprises a resource block start code and the number of resource blocks; and

the scheduling the resources on the multiple first carriers according to the information about the multiple first carriers, the resource block encoding manner, and the indication information comprises:

scheduling the resources on the multiple first carriers according to the number of the first carriers and the serial number of the second carrier, wherein the resources are defined by the resource block start code and the number of the resource blocks.

In a third implemtation of the second embodiment, in the multicarrier configuration message, the information about the multiple first carriers comprises: the number of the first carriers;

the PDCCH command comprises a carrier indicator field indicating a specified carrier, and the resource block encoding manner is that all the resource blocks on the multiple first carriers are encoded in a unified sequence according to carrier numbers, wherein the multiple first carriers are carriers that are referenced by the specified carrier and are indicated by the number of the first carriers, and the specified carrier is indicated by the carrier indicator field in the PDCCH command; and

in the PDCCH command, the indication information of the resource blocks available for the UE comprises a resource block start code and the number of resource blocks; and

the scheduling the resources on the multiple first carriers according to the information about the first carriers, the resource block encoding manner, and the indication information comprises:

scheduling the resources on the multiple first carriers according to the number of the first carriers and the carrier indicated by the carrier indicator field, wherein the resources are defined by the resource block start code and the number of the resource blocks.

According to a third embodiment of present invention, a base station is proposed, where the base station includes:

a multicarrier configuration unit, configured to send a multicarrier configuration message to a user equipment UE, where the multicarrier configuration message includes information about multiple first carriers scheduled by using a physical downlink control channel PDCCH command and information about a resource block encoding manner of the first carriers; and

a sending unit, configured to send the PDCCH command to the UE over a second carrier, where the PDCCH command includes indication information of a resource block available for the UE, so that the UE schedules resources on the first carriers according to the information about the multiple first carriers, the resource block encoding manner, and the indication information;

wherein data multiplexing, encapsulation, transmission and decoding are performed independently for resources on different first carriers, and resources on a same first carrier are considered as a whole for data multiplexing, encapsulation, transmission, and decoding.

In a first implemention of the third embodiment, in the multicarrier configuration message sent by the multicarrier configuration unit to the UE, the information about the first carriers comprises: serial numbers of the multiple first carriers and a serial number of the second carrier on which the PDCCH command for scheduling the multiple first carriers is located, and the resource block encoding manner is that the resource blocks on each carrier among the multiple first carriers are encoded sequentially and separately; and

in the PDCCH command sent by the sending unit to the UE, the indication information of the resource blocks available for the UE comprises a resource block start code and the number of the resource blocks, so that the UE schedules the resources on the multiple first carriers, wherein the resources are defined by the resource block start code and the number of the resource blocks;

wherein the second carrier is one of the multiple first carriers.

In a second implementation of the third embodiment, in the multicarrier configuration message sent by the multicarrier scheduling unit to the UE, the information about the first carriers comprises: the number of the first carriers, and the resource block encoding manner of the first carriers is that all the resource blocks on the multiple first carriers are encoded in a unified sequence according to carrier numbers, wherein the multiple first carriers are carriers that are referenced by the second carrier over which the PDCCH command is sent and are indicated by the number of the first carriers; and

in the PDCCH command sent by the sending unit to the UE, the indication information of the resource block available for the UE comprises a resource block start code and the number of the resource blocks, so that the UE schedules the resources on the multiple first carriers, wherein the resources are defined by the resource block start code and the number of the resource blocks.

In a third implementation of the third embodiment, in the multicarrier configuration message sent by the multicarrier configuration unit to the UE, the information about the first carriers comprises: the number of the first carriers, wherein:

the PDCCH command sent by the sending unit to the UE comprises a carrier indicator field indicating a specified carrier, and the resource block encoding manner is that all the resource blocks on the multiple first carriers are encoded in a unified sequence, wherein the multiple first carriers are carriers that are referenced by the specified carrier and are indicated by the number of the first carriers, and the specified carrier is indicated by the carrier indicator field in the PDCCH command; and

the indication information of the resource blocks available for the UE comprises a resource block start code and the number of resource blocks, so that the UE schedules the resources on the multiple first carriers, wherein the resources are defined by the resource block start code and the number of the resource blocks.

According to the first, second or thired implementation of the third embodiment, the multicarrier configuration message sent by the multicarrier configuration unit to the UE comprises a multicarrier scheduling enable/disable indication, wherein in a case when the multicarrier scheduling enable/disable indication is set to enable, the UE is allowed to perform multicarrier scheduling.

According to a fourth embodiment of present invention, a user equipment is proposed, where the user equipment includes:

a receiving unit, configured to receive a multicarrier configuration message sent by a base station, where the multicarrier configuration message includes information about multiple first carriers scheduled by using a physical downlink control channel PDCCH command and information about a resource block encoding manner of the first carriers,; and

a scheduling unit, configured to receive the PDCCH command sent by the base station over a second carrier, where the PDCCH command includes indication information of a resource block available for the user equipment UE, and the scheduling unit is further configured to schedule resources on the first carriers according to the information about the first carriers, the resource block encoding manner, and the indication wherein data multiplexing, encapsulation, transmission and decoding are performed independently for resources on different first carriers, and resources on a same first carrier are considered as a whole for data multiplexing, encapsulation, transmission, and decoding.

In a first implementation of the fourth embodiment, in the multicarrier configuration message sent by the base station and received by the receiving unit, the information about the first carriers comprises: serial numbers of the multiple first carriers and a serial number of the second carrier on which the PDCCH command for scheduling the multiple first carriers is located, and the resource block encoding manner of the first carriers is that the resource blocks on each carrier among the multiple first carriers are encoded sequentially and separately; and

in the PDCCH command sent by the base station and received by the scheduling unit, the indication information of the resource blocks available for the UE comprises a resource block start code and the number of the resource blocks, and the scheduling unit is further configured to schedule the resources on the multiple first carriers according to the serial numbers of the first carriers, the resource block start code, and the number of the resource blocks, wherein the resources are defined by the resource block start code and the number of the resource blocks;

wherein the second carrier is one of the multiple first carriers.

In a second implementation of the fourth embodiment, in the multicarrier configuration message sent by the base station and received by the receiving unit, the information about the multiple first carriers comprises: the number of the first carriers, and the resource block encoding manner of the first carriers is that all the resource blocks on the multiple first carriers are encoded in a unified sequence according to carrier numbers, wherein the multiple first carriers are carriers that are referenced by the second carrier over which the PDCCH command is sent and are indicated by the number of the first carriers; and

in the PDCCH command sent by the base station and received by the scheduling unit, the indication information of the resource blocks available for the UE comprises a resource block start code and the number of resource blocks, and the scheduling unit is further configured to schedule the resources on the multiple first carriers according to the number of the first carriers and the serial number of the second carrier, wherein the resources are defined by the resource block start code and the number of the resource blocks.

In a third implementation of the fourth embodiment, in the multicarrier configuration message sent by the base station and received by the receiving unit, the information about the multiple first carriers comprises: the number of the first carriers; and

the PDCCH command sent by the base station and received by the scheduling unit comprises a carrier indicator field indicating a specified carrier, and the resource block encoding manner is that all the resource blocks on the multiple first carriers are encoded in a unified sequence according to carrier numbers, wherein the multiple first carriers are carriers that are referenced by the specified carrier and are indicated by the number of the first carriers, and the specified carrier is indicated by the carrier indicator field in the PDCCH command; and

in the PDCCH command sent by the base station and received by the scheduling unit, the indication information of the resource blocks available for the UE comprises a resource block start code and the number of resource blocks, and the scheduling unit is further configured to schedule the resources on the multiple first carriers according to the number of the first carriers and the carrier indicated by the carrier indicator field, wherein the resources are defined by the resource block start code and the number of the resource blocks.

According to the first, second or thired implementation of the fourth embodiment, the multicarrier configuration message sent by the base station and received by the receiving unit comprises a multicarrier scheduling enable/disable indication, and in a case when the multicarrier scheduling enable/disable indication is set to enable, the UE is allowed to perform multicarrier scheduling.

According to the embodiments of the present invention, allowing a UE to schedule resources on multiple carriers by using one PDCCH command is implemented, and a multicarrier scheduling solution different from the prior art is provided.

Further, with the foregoing solution, a multicarrier configuration message is used to configure multiple carriers scheduled by the UE and resources scheduled by the UE, where the resources are on the carriers. When specified resources are scheduled subsequently, resources on multiple carriers can be scheduled simultaneously by using one PDCCH command, which improves efficiency of PDCCHs in scheduling the multiple carriers, lowers the extent to which the PDCCHs are limited, and reduces data transmission delay.

**BRIEF DESCRIPTION OF DRAWINGS**

To describe the technical solutions in the embodiments of the present invention more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.

FIG. 1 is a flowchart of a method for multicarrier scheduling according to an embodiment of the present invention;
FIG. 2 is a distribution diagram of RBs available for a UE to schedule according to Embodiment 1 of the present invention;
FIG. 3 is a distribution diagram of an RB available for a UE to schedule according to Embodiment 1 of the present invention;
FIG. 4 is an RBG distribution diagram of a type of cross-carrier RBG scheduling according to Embodiment 6 of the present invention;
FIG. 5 is a schematic structural diagram of a base station according to an embodiment of the present invention; and
FIG. 6 is a schematic structural diagram of a user equipment according to an embodiment of the present invention.

**DESCRIPTION OF EMBODIMENTS**

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

In the embodiments of the present invention, a user equipment (UE, User Equipment), also called a mobile terminal (Mobile Terminal), a mobile user equipment, or the like, may communicate with one or more core networks through a radio access network (for example, RAN, Radio Access Network). The user equipment may be a mobile terminal, such as a mobile phone (or called a "cellular" phone) or a computer having a mobile terminal, for example, a portable, pocket, hand-held, computer built-in, or vehicle-mounted mobile apparatus, which exchanges a voice and/or data with the radio access network.

In the embodiments of the present invention, a base station is an evolved Node B (eNB or e-NodeB, evolutional Node B) in LTE.

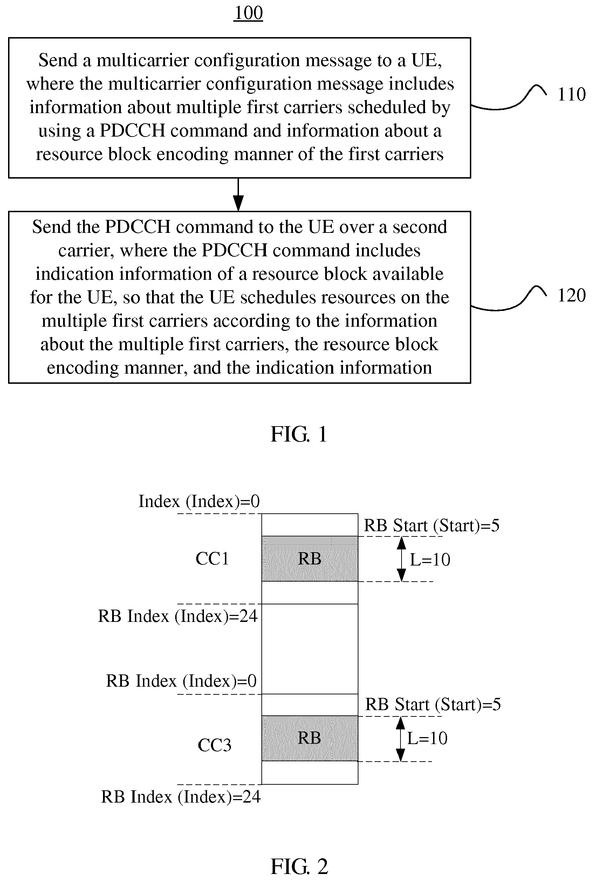

FIG. 1 is a flowchart of a method for multicarrier scheduling according to an embodiment of the present invention. As shown in FIG. 1, method 100 for multicarrier scheduling includes:

110: Send a multicarrier configuration message to a UE, where the multicarrier configuration message includes information about multiple first carriers scheduled by using a PDCCH command and information about a resource block encoding manner of the first carriers;

120: Send the PDCCH command to the UE over a second carrier, where the PDCCH command includes indication information of a resource block available for the UE, so that the UE schedules resources on the multiple first carriers according to the information about the multiple first carriers, the resource block encoding manner, and the indication information.

The following describes in detail an implementation process of the method for multicarrier scheduling in the embodiment of the present invention.

Firstly, in step 110, the multicarrier configuration message is sent to the UE, for example, the multicarrier configuration message is sent to the UE by using a radio resource control (Radio Resource Control, RRC for short) message, a medium access control (Medium Access Control, MAC for short) message, or a physical layer message. In addition, the multicarrier configuration message is included in an existing configuration message that is used for configuring a carrier for the UE, and may also be sent as a dedicated configuration message.

The multicarrier configuration message may specifically include a multicarrier scheduling enable/disable indication, so as to give an indication to the UE whether all configured multiple carriers or all activated multiple carriers can be scheduled by using one PDCCH command. If the multicarrier scheduling enable/disable indication is set to enable, an eNB is capable of scheduling, by using one PDCCH command, the UE to send or receive data over the multiple carriers simultaneously; if the multicarrier scheduling enable/disable indication is set to disable, the eNB is incapable of scheduling, by using one PDCCH command, the UE to send or receive data over the multiple carriers simultaneously, and in this case, if the eNB needs to schedule the UE to send or receive data over the multiple carriers simultaneously, the eNB needs to perform scheduling by using multiple PDCCH commands separately. In a specific configuration process, a multicarrier scheduling enable indication may be used as a default option.

In addition, the multicarrier configuration message may include a set of carriers that can be scheduled by using one PDCCH command, and a carrier capable of scheduling the carrier set. For example, carriers 1 and 2 are a set of carriers that can be scheduled by using one PDCCH command, and multicarrier scheduling can be performed by using one PDCCH command on carrier 1; carriers 3 and 4 are a set of carriers that can be scheduled by using one PDCCH command, and multicarrier scheduling can be performed by using one PDCCH command on carrier 2. After a set of carriers that can be scheduled by using one PDCCH command is configured, one PDCCH is capable of scheduling all carriers in the carrier set or all activated carriers in the carrier set. It should be noted that, in a system where carrier aggregation is applied, all carriers in the system may be numbered for ease of use in scheduling.

In addition, the multicarrier configuration message may include the number of carriers that can be scheduled by using one PDCCH command, for example, 2 carriers or 3 carriers. Alternatively, information about a carrier or carriers on which a PDCCH command is capable of scheduling these carriers may be further included. Alternatively, only the number that can be scheduled by using one PDCCH command is included, and any one PDCCH command on a carrier capable of sending a PDCCH command is capable of scheduling the foregoing number of carriers.

In addition, alternatively, the carrier configuration message further includes information about a resource block encoding manner of a first carrier scheduled by using one PDCCH command.

Then, in step 120, the PDCCH command is sent to the UE over a second carrier, where the PDCCH command includes indication information of a resource block available for the UE, so that the UE schedules resources on the multiple first carriers according to the information about the first carriers, the resource block encoding manner, and the indication information. After carriers that can be scheduled by using one PDCCH command are configured in step 110, in step 120, an eNB gives an indication, by using the PDCCH command, to the UE in details on how to use these carriers, that is, how to use resource blocks (Resources Block, RB for short) of these carriers to send or receive data.

The following describes the embodiments in detail.

## Embodiment 1

The multicarrier scheduling configuration message sent by the eNB to the UE indicates, to the UE carrier serial numbers of multiple carriers that can be scheduled by using one PDCCH command for the UE to send or receive data, information about a resource block encoding manner of the multiple carriers, and the serial number of a carrier on which the PDCCH command for scheduling the multiple carriers is located. The resource block encoding manner is that the carriers are encoded sequentially and separately. For ease of description, the carrier that the eNB schedules by using the PDCCH command for the UE to send or receive data is called a first carrier, and the carrier on which the PDCCH command for scheduling the multiple first carriers is located is called a second carrier. The same terms are used in the following embodiments.

Then, the eNB sends the PDCCH command to the UE over the second carrier. In the PDCCH command, the indication information of the resource block available for the UE includes a resource block start code and the number of resource blocks, so that the UE uses resources on the multiple first carriers, where the resources are defined by the resource block start code and the number of the resource blocks.

For example, if the first carriers are carriers 1 and 3, the second carrier is carrier 2, codes of RBs on carriers 1 and 3 are RB Index=0-24 each, a start code of resource blocks available for the UE is RB Start=5, and number L=10, it indicates that the UE uses 10 resource blocks with the resource block serial numbers RB Index=5-14 on carriers 1 and 3 each. Distribution of the specified scheduled RBs is shown in FIG. 2. Alternatively, when a largest RB Index of one or more carriers among the multiple first carriers is greater than or equal to the RB Start and smaller than the RB Start+L-1, actual resources on the one or more carriers among the multiple first carriers are resources indicated from the RB Start to the largest RB Index of the one or more carriers, or the carriers do not participate in multicarrier scheduling this time. For example, when codes of RBs on carrier 1 are RB Index=0-15, if a start code of resource blocks available for the UE is RB Start=10, and number L=10, it indicates that actual resources used on carrier 1 are resources with RB Index=10-15, or carrier 1 does not participate in multicarrier scheduling this time. When the largest RB Index of the one or more carriers among the multiple first carriers is smaller than the RB Start, the carriers do not participate in the multicarrier scheduling this time. For example, when codes of RBs on carrier 1 are RB Index=0-10, if a start code of resource blocks available for the UE is RB Start=15, and number L=10, it indicates that carrier 1 does not participate in multicarrier scheduling this time.

Alternatively, the second carrier may also be one of the first carriers, that is, carrier 1 or carrier 3.

## Embodiment 2

As a variant of Embodiment 1, the multicarrier scheduling configuration message sent by the eNB to the UE indicates that codes of the multiple first carriers scheduled by the UE are sequential, and the resource block encoding manner of the first carriers is that the first carriers are encoded in a unified sequence.

Then, the eNB sends the PDCCH command to the UE over the second carrier. In the PDCCH command, the indication information of the resource block available for the UE includes a resource block start code and the number of resource blocks, so that the UE uses resources on the first carriers, where the resources are defined by the resource block start code and the number of the resource blocks.

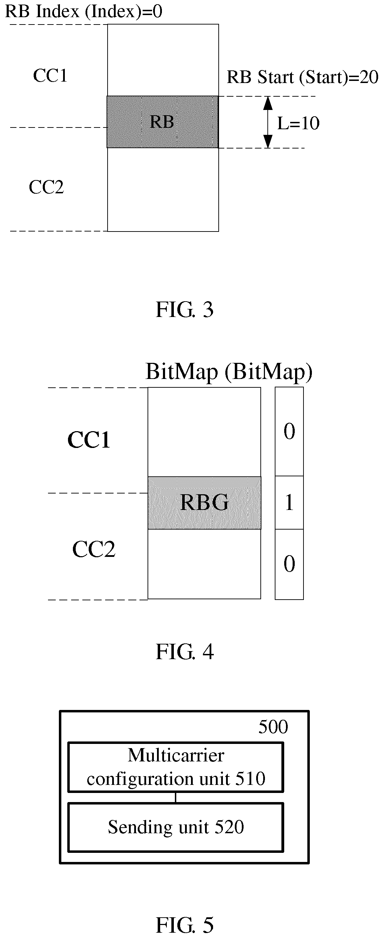

For example, the first carriers are carriers 1 and 2, the second carrier is carrier 3, and codes of RBs on carriers 1 and 2 are RB Index=0-49, that is, RB Index=0-24 on carrier 1 and RB Index=25-49 on carrier 2; the PDCCH command indicates that resources available for the UE are RB Start=20, and L=10, indicating that the UE may use resources with RB Index=20-24 on carrier 1 and resources with RB Index=25-29 on carrier 2 (which is corresponding to RB Index=0-4 on carrier 2). Distribution of the specified scheduled RBs is shown in FIG. 3.

Similarly, the second carrier may also be one of the first carriers, that is, carrier 1 or carrier 2.

## Embodiment 3

The multicarrier scheduling configuration message sent by the eNB to the UE indicates the number of the multiple first carriers scheduled by the UE, where the resource block encoding manner of the first carriers is referenced by the second carrier over which the PDCCH command is sent, and the resource block encoding manner of the first carriers is that carriers indicated by the number of the first carriers are encoded sequentially.

According to this embodiment of the present invention, in specific implementation, all carriers configured for the UE may be scheduled by default, and the number of the first carriers equals the number of all the carriers configured for the UE.

Then, the eNB sends the PDCCH command to the UE over the second carrier. In the PDCCH command, the indication information of the resource block available for the UE includes a resource block start code and the number of resource blocks, so that the UE uses resources on the first carriers, where the resources are defined by the resource block start code and the number of the resource blocks.

For example, the multicarrier scheduling configuration message sent by the eNB to the UE indicates that the number of the first carriers is 2, and then the eNB sends the PDCCH command to the UE over carrier 2, where the PDCCH command indicates that the UE may schedule carriers 2 and 3; the resource block encoding manner in the PDCCH command is that resource blocks on carriers 2 and 3 are encoded as RB Index=0-49, that is, RB Index=0-24 on carrier 2, and RB Index=25-49 on carrier 3; the PDCCH command indicates that resources available for the UE are RB Start=20, and L=10, indicating that the UE may use resources with RB Index=20-24 on carrier 2 and resources with RB Index=25-29 (which is corresponding to RB Index=0-4 on carrier 3) on carrier 3.

## Embodiment 4

As an alternative embodiment, the multicarrier scheduling configuration message sent by the eNB to the UE indicates the number of the multiple first carriers scheduled by the UE, where the resource block encoding manner of the first carriers is that RBs of the first carriers are encoded sequentially and separately, that is, resource blocks on carriers 2 and 3 are encoded sequentially and separately. For example, RB Index=0-24 on carrier 2, and RB Index=0-24 on carrier 3; the PDCCH command indicates that resources available for the UE are RB Start=5, and L=10, indicating that the UE may use resources with RB Index=5-14 on carrier 2 and resources with RB Index=5-14 on carrier 3.

## Embodiment 5

As a variant of Embodiment 3, the multicarrier scheduling configuration message sent by the eNB to the UE indicates the number of the multiple first carriers scheduled by the UE.

Then, the eNB sends the PDCCH command to the UE over the second carrier, where the PDCCH command may include a carrier indicator field (Carrier Indicator Field, CIF for short), and the CIF indicates a reference code of the first carriers available for the UE to schedule.

For example, in the example of Embodiment 3, if CIF=3, the PDCCH command indicates that the UE may schedule carriers 3 and 4; the resource block encoding manner in the PDCCH command is that resource blocks on carriers 3 and 4 are encoded as RB Index=0-49, that is, RB Index=0-24 on carrier 3, and RB Index=25-49 on carrier 4; if the PDCCH command indicates that resources available for the UE are RB Start=20, and L=10, it indicates that the UE may use resources with RB Index=20-24 on carrier 3 and resources with RB Index=25-29 on carrier 4.

Similarly, as a variant of Embodiment 4, the resource block encoding manner in the multicarrier scheduling configuration message may be that resource blocks on carriers 3 and 4 are encoded sequentially and separately, that is, RB Index=0-24 on carrier 3, and RB Index=0-24 on carrier 4; if the PDCCH command indicates that resources available for the UE are RB Start=5, and L=10, it indicates that the UE may use resources with RB Index=5-14 on carrier 3 and resources with RB Index=5-14 on carrier 4.

**Embodiment 6**

The multicarrier scheduling configuration message sent by the eNB to the UE indicates carrier serial numbers of the multiple first carriers scheduled by the UE, where the resource block encoding manner of the first carriers is that resource blocks on the carriers are grouped into multiple resource block groups according to a system bandwidth and a predefined resource block group (Resource block Group, RBG for short) size (Size, denoted by P). The RBG herein is formed by several RBs. The RBG size relates to a total bandwidth of a multicarrier system. In a situation in which the number of RBs on each carrier is given, the RBG size relates to the number of carriers available for the UE to schedule, as shown in Table 1. To ensure that a size of a PDCCH in use is the same for different system bandwidths, the RBG size increases as the system bandwidth increases. That is, a higher system bandwidth indicates a greater RBG size and a larger resource allocation granularity.

**Table 1**

| System Bandwidth $N_{RB}^{DL}$ | RBG Size (P) |
|---|---|
| <10 | 1 |
| 11-26 | 2 |
| 27-63 | 3 |
| 64-110 | 4 |
| 111-219 | 6 |

$N_{RB}^{DL}$ in table 1 is the total number of RBs on one or more carriers available for the UE to schedule. The RBG size (P) is the number of RBs contained in each RBG.

In this embodiment of the present invention, the RBs on the multiple first carriers are separately grouped into RBGs. Then $\lceil N_{RB}^{DL} / P \rceil$ bits are used in Bitmap (Bitmap) format to indicate RBG resources available for the UE.

For example, the multicarrier scheduling configuration message sent by the eNB to the UE indicates that the multiple first carriers scheduled by the UE are carriers 1 and 3. If each carrier includes 25 RBs, according to table 1, an RBG size is 3 RBs. Therefore, RBs on carriers 1 and 3 may be grouped into 9 RBGs each, and an 18-bit (each carrier is indicated by 9 bits) Bitmap is used to indicate RBGs available for the UE. The RBGs available for the UE may also be indicated in the following manner, that is, using a 17-bit Bitmap.

In addition, according to the foregoing Embodiment 2, the multicarrier scheduling configuration message sent by the eNB to the UE indicates that codes of the multiple first carriers scheduled by the UE are sequential. For example, the first carriers are carriers 1 and 2, so that carriers 1 and 2 can be considered as a whole and grouped into RBGs to form 17 RBGs, where one RBG crosses carriers 1 and 2, meaning that the RBG includes 1 RB on carrier 1 and 2 RBs on carrier 2. For example, a Bitmap indicating RBGs which schedules cross-carriers 1 and 2 is shown in FIG. 4.

In addition, according to the foregoing Embodiments 3, 4, and 5, after a specified first carrier is determined, resources available for the UE to schedule can be indicated in a manner of grouping RBGs and using a Bitmap.

In all the foregoing embodiments, no matter which resource allocation manner is used, resources on different carriers need to be used as independent resources. That is, data multiplexing and encapsulation are performed independently and transmission and decoding are performed independently. Resources on a same carrier are considered as a whole for data multiplexing, encapsulation, transmission, and decoding.

According to the embodiments of the present invention, allowing a UE to schedule resources on multiple carriers by using one PDCCH command is implemented, which improves efficiency of using PDCCHs to schedule multiple carriers, relieves PDCCH constraints, and reduces data transmission delay.

FIG. 5 is a schematic structural diagram of a base station implementing a method for multicarrier scheduling according to the present invention. As shown in FIG. 5, the base station 500 includes:

a multicarrier configuration unit 510, configured to send a multicarrier configuration message to a user equipment UE, where the multicarrier configuration message includes information about multiple first carriers scheduled by using a physical downlink control channel PDCCH command and information about a resource block encoding manner of the first carriers; and

a sending unit 520, configured to send the PDCCH command to the UE over a second carrier, where the PDCCH command includes indication information of a resource block available for the UE, so that the UE schedules resources on the first carriers according to the information about the multiple first carriers, the resource block encoding manner, and the indication information.

According to the embodiment of the present invention, in the multicarrier configuration message sent by the multicarrier configuration unit 510 to the UE, the information about the first carriers includes: serial numbers of sequentially numbered first carriers among the carriers and the serial number of the second carrier on which the PDCCH command for scheduling the first carriers is located, where the resource block encoding manner is that the carriers are encoded sequentially and separately, and

in the PDCCH command sent by the sending unit 520 to the UE, the indication information of the resource block available for the UE includes a resource block start code and the number of resource blocks, so that the UE uses resources on the first carriers, where the resources are defined by the resource block start code and the number of the resource blocks.

According to the embodiment of present invention, the second carrier is one of the first carriers.

According to the embodiment of the present invention, in the multicarrier configuration message sent by the multicarrier configuration unit 510 to the UE, the information about the first carriers includes: the number of the sequentially numbered first carriers among the carriers, the resource block encoding manner of the carriers is referenced by the second carrier over which the PDCCH command is sent, and the resource block encoding manner of the carriers is that carriers indicated by the number of the first carriers are encoded sequentially according to the carrier numbers; in the PDCCH command sent by the sending unit 520 to the UE, the indication information of the resource block available for the UE includes a resource block start code and the number of resource blocks, so that the UE uses resources on the first carriers, where the resources are defined by the resource block start code and the number of the resource blocks.

According to the embodiment of the present invention, in the multicarrier configuration message sent by the multicarrier configuration unit to the UE, the information about the first carriers includes: the number of the sequentially numbered first carriers among the carriers;

the PDCCH command sent by the sending unit to the UE includes a carrier indicator field indicating a specified carrier. The resource block encoding manner of the first carriers is referenced by the second carrier over which the PDCCH command is sent, and the resource block encoding manner of the first carriers is that carriers indicated by the number of the first carriers are encoded sequentially according to the carrier numbers; and the indication information of the resource block available for the UE includes the resource block start code and the number of the resource blocks, so that the UE uses the resources on the first carriers, where the resources are defined by the resource block start code and the number of the resource blocks.

According to the embodiment of the present invention, in the multicarrier configuration message sent by the multicarrier configuration unit 510 to the UE, the resource block encoding manner of the carriers is that: resource blocks on the first carriers are grouped into multiple resource block groups according to the number of the first carriers and a predefined resource block group size, where the resource block groups include resource blocks on a same first carrier and/or resource blocks on neighboring first carriers; and

in the PDCCH command sent by the sending unit 520 to the UE, the indication information of the resource block available for the UE includes a bitmap, where the bitmap indicates the resource block groups available for the UE.

According to the embodiment of the present invention, the multicarrier configuration message sent by the multicarrier configuration unit 510 to the UE includes a multicarrier scheduling enable/disable indication. In a situation in which a configuration is enable, the UE is allowed to perform multicarrier scheduling. In a situation in which the configuration is disable, the UE is not allowed to perform multicarrier scheduling.

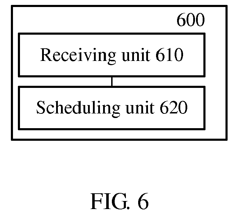

FIG. 6 is a schematic structural diagram of a user equipment implementing a method for multicarrier scheduling according to the present invention. As shown in FIG. 6, user equipment 700 includes:

  a receiving unit 610, configured to receive a multicarrier configuration message sent by a base station, where the multicarrier configuration message includes information about multiple first carriers scheduled by using a physical downlink control channel PDCCH command and information about a resource block encoding manner of the first carriers; a scheduling unit 620, configured to receive the PDCCH command sent by the base station over a second carrier, where the PDCCH command includes indication information of a resource block available for a user equipment UE, and the scheduling unit 620 is further configured to schedule resources on the first carriers according to the information about the first carriers, the resource block encoding manner, and the indication information.

According to the embodiment of the present invention, in the multicarrier configuration message sent by the base station and received by the receiving unit 610, the information about the first carriers includes: serial numbers of sequentially numbered first carriers among the carriers and the serial number of the second carrier on which the PDCCH command for scheduling the first carriers is located, and the resource block encoding manner is that the carriers are encoded sequentially and separately; and

in the PDCCH command sent by the base station and received by the scheduling unit 620, the indication information of the resource block available for the UE includes a resource block start code and the number of resource blocks. The scheduling unit 620 is further configured to schedule, according to the serial numbers of the first carriers, the resource block start code, and the number of the resource blocks, resources on the first carriers, where the resources are defined by the resource block start code and the number of the resource blocks.

According to the embodiment of present invention, the second carrier is one of the first carriers.

According to the embodiment of the present invention, in the multicarrier configuration message sent by the base station and received by the receiving unit 610, the information about the first carriers includes: the number of the sequentially numbered first carriers among the carriers, the resource block encoding manner of the first carriers is referenced by the second carrier over which the PDCCH command is sent, and the resource block encoding manner of the first carriers is that carriers indicated by the number of the first carriers are encoded sequentially according to the carrier numbers; and

in the PDCCH command sent by the base station and received by the scheduling unit 620, the indication information of the resource block available for the UE includes a resource block start code and the number of resource blocks. The scheduling unit 620 is further configured to schedule, according to the number of the first carriers and the serial number of the second carrier, resources on the first carriers, where the resources are defined by the resource block start code and the number of the resource blocks.

According to the embodiment of the present invention, in the multicarrier configuration message sent by the base station and received by the receiving unit 610, the information about the first carriers includes: the number of the sequentially numbered first carriers among the carriers.

The PDCCH command sent by the base station and received by the receiving unit 620 includes a carrier indicator field indicating a specified carrier. The resource block encoding manner of the first carriers is referenced by the second carrier over which the PDCCH command is sent, and the resource block encoding manner of the first carriers is that carriers indicated by the number of the first carriers are encoded sequentially according to the carrier numbers; and

the indication information of the resource block available for the UE includes the resource block start code and the number of the resource blocks. The scheduling unit is further configured to schedule, according to the number of the first carriers and the carrier indicated by the carrier indicator field, resources on the first carriers, where the resources are defined by the resource block start code and the number of the resource blocks.

According to the embodiment of the present invention, in the multicarrier configuration message sent by the base station and received by the receiving unit 610, the resource block encoding manner of the first carriers is that: resource blocks on the first carriers are grouped into multiple resource block groups according to the number of the first carriers and a predefined resource block group size, where the resource block groups include resource blocks on a same first carrier and/or resource blocks on neighboring first carriers; and in the PDCCH command sent by the base station and received by the scheduling unit 620, the indication information of the resource block available for the UE includes a bitmap, where the bitmap indicates the resource block groups available for the UE.

According to the embodiment of the present invention, the multicarrier configuration message sent by the base station and received by the receiving unit 610 includes a multicarrier scheduling enable/disable indication. In a situation in which a configuration is enable, the UE is allowed to perform multicarrier scheduling. In a situation in which the configuration is disable, the UE is not allowed to perform multicarrier scheduling.

A person of ordinary skill in the art may be aware that, in combination with the examples described in the embodiments disclosed in this specification, units and algorithm steps may be implemented by electronic hardware, or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiments are merely exemplary. For example, the unit division is merely logical function division and may be other division in actual implementation. For example, multiple units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and the parts displayed as units may or may not be physical units, may be located in one position, or may be distributed on multiple network units. A part of or all of the units may be selected according to actual needs to achieve the objectives of the solutions of the embodiments.

In addition, functional units in the embodiments of the present invention may be integrated into one processing unit, or each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of the present invention essentially, or the part contributing to the prior art, or a part of the technical solutions may be implemented in a form of a software product. The computer software product is stored in a storage medium and includes several instructions for instructing a computer device (which may be a personal computer, a server, or a network device) to perform all or a part of the steps of the methods described in the embodiments of the present invention. The foregoing storage medium includes: any mediums that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific embodiments of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the appended claims.

**Claims**

1. A method for a base station for multicarrier scheduling, comprising:

    sending (110) a multicarrier configuration message to a user equipment, UE, wherein the multicarrier configuration message comprises information about multiple first carriers scheduled by a physical downlink control channel, PDCCH, command; and
    sending (120) the PDCCH command to the UE over a second carrier, wherein the PDCCH command comprises indication information of resource blocks available for the UE, so that the UE schedules resources on the multiple first carriers according to the information about the multiple first carriers, a resource block encoding manner, and the indication information.;

    and the method **characterized in that**

    the multicarrier configuration message further comprises information about the resource block encoding manner of the first carriers; and
    data multiplexing, encapsulation, transmission and decoding are performed independently for resources on different first carriers, and resources on a same first carrier are considered as a whole for data multiplexing, encapsulation, transmission, and decoding.

2. The method according to claim 1, wherein:

    in the multicarrier configuration message sent to the UE, the information about the multiple first carriers comprises: serial numbers of the multiple first carriers and the serial number of the second carrier on which the PDCCH command for scheduling the multiple first carriers is located, and the resource block encoding manner is that the resource blocks on each carrier in the multiple first carriers are encoded sequentially and separately; and
    in the PDCCH command sent to the UE, the indication information of the resource blocks available for the UE comprises a resource block start code and the number of the resource blocks, so that the UE schedules the resources on the multiple first carriers according to the serial numbers of the first carriers, the resource block start code, and the number of the resource blocks, wherein the resources are defined by the resource block start code and the number of the resource blocks.

3. The method according to claim 1, wherein:

    in the multicarrier configuration message sent to the UE, the resource block encoding manner is that: the resource blocks on the first carriers are grouped into multiple resource block groups according to the number of the first carriers and a predefined resource block group size, wherein the resource block groups comprise a resource block on one first carrier and/or a resource block on a neighboring first carrier; and
    in the PDCCH command sent to the UE, the indication information of the resource blocks available for the UE comprises a bitmap, wherein the bitmap indicates the resource block groups available for the UE.

4. The method according to any one of claims 1 to 3, wherein:

    the multicarrier configuration message sent to the UE comprises a multicarrier scheduling enable/disable indication, and in a case when the multicarrier scheduling enable/disable indication is set to enable, the UE is allowed to perform multicarrier scheduling.

5. A method for a user equipment for multicarrier scheduling, comprising:

receiving a multicarrier configuration message sent by a base station, wherein the multicarrier configuration message comprises information about multiple first carriers scheduled by a physical downlink control channel, PDCCH, command;

receiving the PDCCH command sent by the base station over a second carrier, wherein the PDCCH command comprises indication information of resource blocks available for a user equipment, UE; and

scheduling resources on the multiple first carriers according to the information about the multiple first carriers, a resource block encoding manner, and the indication information;

and the method **characterized in that**

the multicarrier configuration message further comprises information about the resource block encoding manner of the first carriers; and

data multiplexing, encapsulation, transmission and decoding are performed independently for resources on different first carriers, and resources on a same first carrier are considered as a whole for data multiplexing, encapsulation, transmission, and decoding.

6. The method according to claim 5, wherein:

in the multicarrier configuration message, the information about the multiple first carriers comprises: serial numbers of the multiple first carriers and a serial number of the second carrier on which the PDCCH command for scheduling the multiple first carriers is located, and the resource block encoding manner is that the resource blocks on each carrier among the multiple first carriers are encoded sequentially and separately; and

in the PDCCH command, the indication information of the resource blocks available for the UE comprises a resource block start code and the number of the resource blocks; and

the scheduling the resources on the multiple first carriers according to the information about the multiple first carriers, the resource block encoding manner, and the indication information comprises:

scheduling the resources on the multiple first carriers according to the serial numbers of the multiple first carriers, the resource block start code, and the number of the resource blocks, wherein the resources are defined by the resource block start code and the number of the resource blocks.

7. The method according to claim 5, wherein:

in the multicarrier configuration message, the resource block encoding manner is that: the resource blocks on the first carriers are grouped into multiple resource block groups according to the number of the first carriers and a predefined resource block group size, wherein the resource block groups comprise a resource block on one first carrier and/or a resource block on a neighboring first carrier; and

the indication information of the resource blocks available for the UE comprises a bitmap, wherein the bitmap indicates the resource block groups available for the UE.

8. The method according to claim 5, wherein:

the multicarrier configuration message comprises a multicarrier scheduling enable/disable indication, and in a case when the multicarrier scheduling enable/disable indication is set to enable, the UE is allowed to perform multicarrier scheduling.

9. A base station, comprising:

a multicarrier configuration unit (510), configured to send a multicarrier configuration message to a user equipment, UE, wherein the multicarrier configuration message comprises information about multiple first carriers scheduled by a physical downlink control channel, PDCCH command; and

a sending unit (520), configured to send the PDCCH command to the UE over a second carrier, wherein the PDCCH command comprises indication information of resource blocks available for the UE, so that the UE schedules resources on the first carriers according to the information about the multiple first carriers, a resource block encoding manner, and the indication information;

and the base station **characterized in that**

the multicarrier configuration message further comprises information about the resource block encoding manner of the first carriers; and

data multiplexing, encapsulation, transmission and decoding are performed independently for resources on different first carriers, and resources on a same first carrier are considered as a whole for data multiplexing, encapsulation, transmission, and decoding.

**10.** The base station according to claim 9, wherein:

> in the multicarrier configuration message sent by the multicarrier configuration unit (510) to the UE, the information about the first carriers comprises: serial numbers of the multiple first carriers and a serial number of the second carrier on which the PDCCH command for scheduling the multiple first carriers is located, and the resource block encoding manner is that the resource blocks on each carrier among the multiple first carriers are encoded sequentially and separately; and
> in the PDCCH command sent by the sending unit (520) to the UE, the indication information of the resource blocks available for the UE comprises a resource block start code and the number of the resource blocks, so that the UE schedules the resources on the multiple first carriers, wherein the resources are defined by the resource block start code and the number of the resource blocks.

**11.** The base station according to claim 9, wherein:

> in the multicarrier configuration message sent by the multicarrier configuration unit (510) to the UE, the resource block encoding manner of the first carriers is that: the resource blocks on the first carriers are grouped into multiple resource block groups according to the number of the first carriers and a predefined resource block group size, wherein the resource block groups comprise a resource block on one first carrier and/or a resource block on a neighboring first carrier; and
> in the PDCCH command sent by the sending unit (520) to the UE, the indication information of the resource blocks available for the UE comprises a bitmap, wherein the bitmap indicates the resource block groups available for the UE.

**12.** The base station according to any one of claims 9 to 11, wherein:

> the multicarrier configuration message sent by the multicarrier configuration unit (510) to the UE comprises a multicarrier scheduling enable/disable indication, wherein in a case when the multicarrier scheduling enable/disable indication is set to enable, the UE is allowed to perform multicarrier scheduling.

**13.** A user equipment, comprising:

> a receiving unit (610), configured to receive a multicarrier configuration message sent by a base station, wherein the multicarrier configuration message comprises information about multiple first carriers scheduled by a physical downlink control channel, PDCCH, command; and a scheduling unit (620), configured to receive the PDCCH command sent by the base station over a second carrier, wherein the PDCCH command comprises indication information of resource blocks available for a user equipment, UE, and the scheduling unit (620) is further configured to schedule resources on the multiple first carriers according to the information about the multiple first carriers, a resource block encoding manner, and the indication information;

and the user equipment **characterized in that**

> the multicarrier configuration message further comprises information about the resource block encoding manner of the first carriers; and data multiplexing, encapsulation, transmission and decoding are performed independently for resources on different first carriers, and resources on a same first carrier are considered as a whole for data multiplexing, encapsulation, transmission, and decoding.

**14.** The user equipment according to claim 13, wherein:

> in the multicarrier configuration message sent by the base station and received by the receiving unit (610), the information about the first carriers comprises: serial numbers of the multiple first carriers and a serial number of the second carrier on which the PDCCH command for scheduling the multiple first carriers is located, and the resource block encoding manner of the first carriers is that the resource blocks on each carrier among the multiple first carriers are encoded sequentially and separately; and
> in the PDCCH command sent by the base station and received by the scheduling unit (620), the indication information of the resource blocks available for the UE comprises a resource block start code and the number of the resource blocks, and the scheduling unit (620) is further configured to schedule the resources on the multiple first carriers according to the serial numbers of the first carriers, the resource block start code, and the number of the resource blocks, wherein the resources are defined by the resource block start code and the number of the resource blocks.

**15.** The user equipment according to claim 13, wherein:

> in the multicarrier configuration message sent by the base station and received by the receiving unit (610), the resource block encoding manner is that: the resource blocks on the first carriers are grouped into multiple resource block groups according to the number of the first carriers and a predefined resource block group size, wherein the resource block groups comprise a resource blocks on one first carrier and/or a resource block on a neighboring first carrier; and in the PDCCH command sent by the base station and received by the scheduling unit (620), the indication information of the resource blocks available for the UE comprises a bitmap, wherein the bitmap indicates the resource block groups available for the UE.

16. The user equipment according to any one of claims 13 to 15, wherein:

the multicarrier configuration message sent by the base station and received by the receiving unit (610) comprises a multicarrier scheduling enable/disable indication, and in a case when the multicarrier scheduling enable/disable indication is set to enable, the UE is allowed to perform multicarrier scheduling.

**Patentansprüche**

1. Verfahren für eine Basisstation zur Mehrträgereinteilung, umfassend:

Senden (110) einer Mehrträger-Konfigurationsnachricht zu einem Benutzergerät UE, wobei die Mehrträger-Konfigurationsnachricht Informationen über mehrere erste Träger umfasst, die durch einen "Physical Downlink Control Channel"- bzw. PDCCH-Befehl eingeteilt werden; und
Senden (120) des PDCCH-Befehls zu dem UE über einen zweiter Träger, wobei der PDCCH-Befehl Angabeinformationen von für das UE verfügbaren Ressourcenblöcken umfasst, so dass das UE Ressourcen auf den mehreren ersten Trägern gemäß den Informationen über die mehreren ersten Träger, einer Ressourcenblock-Codierungsweise und den Angabeinformationen einteilt;

und wobei das Verfahren **dadurch gekennzeichnet ist, dass**

die Mehrträger-Konfigurationsnachricht ferner Informationen über die Ressourcenblock-Codierungsweise der ersten Träger umfasst; und Datenmultiplexen, Einkapselung, Übertragung und Decodierung unabhängig für Ressourcen auf verschiedenen ersten Trägern durchgeführt werden und Ressourcen auf einem selben ersten Träger für Datenmultiplexen, Einkapselung, Übertragung und Decodierung als ein Ganzes betrachtet werden.

2. Verfahren nach Anspruch 1, wobei in der zu dem UE gesendeten Mehrträger-Konfigurationsnachricht die Informationen über die mehreren ersten Träger Folgendes umfassen: Seriennummern der mehreren ersten Träger und die Seriennummer des zweiten Trägers, auf dem sich der PDCCH-Befehl zum Einteilen der mehreren ersten Träger befindet, und die Ressourcenblock-Codierungsweise darin besteht, dass die Ressourcenblöcke auf jeden Träger in den mehreren ersten Trägern sequenziell und getrennt codiert werden; und in dem zu dem UE gesendeten PDCCH-Befehl die Angabeinformationen der für das UE verfügbaren Ressourcenblöcke einen Ressourcenblock-Startcode und die Anzahl der Ressourcenblöcke umfassen, so dass das UE die Ressourcen auf den mehreren ersten Trägern gemäß den Seriennummern der ersten Träger, dem Ressourcenblock-Startcode und der Anzahl der Ressourcenblöcke einteilt, wobei die Ressourcen durch den Ressourcenblock-Startcode und die Anzahl der Ressourcenblöcke definiert werden.

3. Verfahren nach Anspruch 3, wobei in der zu dem UE gesendeten Mehrträger-Konfigurationsnachricht die Ressourcenblock-Codierungsweise darin besteht, dass die Ressourcenblöcke auf den ersten Trägern gemäß der Anzahl der ersten Träger und einer vordefinierten Ressourcenblock-Gruppengröße zu mehreren Ressourcenblockgruppen gruppiert werden, wobei die Ressourcenblockgruppen einen Ressourcenblock auf einem ersten Träger und/oder einen Ressourcenblock auf einem benachbarten ersten Träger umfassen; und in dem zu dem UE gesendeten PDCCH-Befehl die Angabeinformationen der für das UE verfügbaren Ressourcenblöcke eine Bitmap umfassen, wobei die Bitmap die für das UE verfügbaren Ressourcenblockgruppen angibt.

4. Verfahren nach einem der Ansprüche 1 bis 3, wobei die zu dem UE gesendete Mehrträger-Konfigurationsnachricht eine Mehrträgereinteilungsfreigabe-/- sperrangabe umfasst und falls die Mehrträgereinteilungsfreigabe-/- sperrangabe auf Freigabe gesetzt ist, dem UE erlaubt ist, Mehrträgereinteilung durchzuführen.

5. Verfahren für ein Benuzergerät zur Mehrträger-Einteilung, umfassend:

Empfangen einer durch eine Basisstation gesendeten Mehrträger-Konfigurationsnachricht, wobei die Mehrträger-Konfigurationsnachricht Informationen über mehrere erste Träger umfasst, die durch einen "Physical Downlink Control Channel"- bzw. PDCCH-Befehl eingeteilt werden;

Empfangen des durch die Basisstation über einen zweiten Träger gesendeten PDCCH-Befehls, wobei der PDCCH-Befehl Angabeinformationen von für ein Benutzergerät UE verfügbaren Ressourcenblöcken umfasst; und

Einteilen von Betriebsmitteln auf den mehreren ersten Trägern gemäß den Informationen über die mehreren ersten Träger, einer Ressourcenblock-Codierungsweise und den Angabeinformationen;

und wobei das Verfahren **dadurch gekennzeichnet ist, dass**

die Mehrträger-Konfigurationsnachricht ferner Informationen über die Ressourcenblock-Codierungsweise der ersten Träger umfasst; und Datenmultiplexen, Einkapselung, Übertragung und Decodierung unabhängig für Ressourcen auf verschiedenen ersten Trägern durchgeführt werden und Ressourcen auf einem selben ersten Träger für Datenmultiplexen, Einkapselung, Übertragung und Decodierung als ein Ganzes betrachtet werden.

6. Verfahren nach Anspruch 5, wobei in der zu dem UE gesendeten Mehträger-Konfigurationsnachricht die Informationen über die mehreren ersten Träger Folgendes umfassen: Seriennummern der mehreren ersten Träger und eine Seriennummer des zweiten Trägers, auf dem sich der PDCCH-Befehl zum Einteilen der mehreren ersten Träger befindet, und die Ressourcenblock-Codierungsweise darin besteht, dass die Ressourcenblöcke auf jeden Träger in den mehreren ersten Trägern sequenziell und getrennt codiert werden; und in dem PDCCH-Befehl die Angabeinformationen der für das UE verfügbaren Ressourcenblöcke einen Ressourcenblock-Startcode und die Anzahl der Ressourcenblöcke umfassen; und das Einteilen der Ressourcen auf den mehreren ersten Trägern gemäß den Informationen über die mehreren ersten Träger, der Ressourcenblock-Codierungsweise und den Angabeinformationen Folgendes umfasst:

Einteilen der Ressourcen auf den mehreren ersten Trägern gemäß den Seriennummern der mehreren ersten Träger, dem Ressourcenblock-Startcode und der Anzahl der Ressourcenblöcke, wobei die Ressoucen durch den Ressourcenblock-Startcode und die Anzahl der Ressourcenblöcke definiert werden.

7. Verfahren nach Anspruch 5, wobei in der zu dem UE gesendeten Mehrträger-Konfigurationsnachricht die Ressourcenblock-Codierungsweise darin besteht, dass die Ressourcenblöcke auf den ersten Trägern gemäß der Anzahl der ersten Träger und einer vordefinierten Ressourcenblock-Gruppengröße zu mehreren Ressourcenblockgruppen gruppiert werden, wobei die Ressourcenblockgruppen einen Ressourcenblock auf einem ersten Träger und/oder einen Ressourcenblock auf einem benachbarten ersten Träger umfassen; und die Angabeinformationen der für das UE verfügbaren Ressourcenblöcke eine Bitmap umfassen, wobei die Bitmap die für das UE verfügbaren Ressourcenblockgruppen angibt.

8. Verfahren nach Anspruch 5, wobei die zu dem UE gesendete Mehrträger-Konfigurationsnachricht eine Mehrträgereinteilungsfreigabe-/-sperrangabe umfasst und falls die Mehrträgereinteilungsfreigabe-/- sperrangabe auf Freigabe gesetzt ist, dem UE erlaubt ist, Mehrträgereinteilung durchzuführen.

9. Basisstation, umfassend:

eine Mehrträger-Konfigurationseinheit (510), ausgelegt zum Senden einer Mehrträger-Konfigurationsnachricht zu einem Benutzergerät UE, wobei die Mehrträger-Konfigurationsnachricht Informationen über mehrere erste Träger umfasst, die durch einen "Physical Downlink Control Channel"- bzw. PDCCH-Befehl eingeteilt werden; und

eine Sendeeinheit (520), ausgelegt zum Senden des PDCCH-Befehls zu dem UE über einen zweiter Träger, wobei der PDCCH-Befehl Angabeinformationen von für das UE verfügbaren Ressourcenblöcken umfasst, so dass das UE Ressourcen auf den mehreren ersten Trägern gemäß den Informationen über die mehreren ersten Träger, einer Ressourcenblock-Codierungsweise und den Angabeinformationen einteilt;

und wobei die Basisstation **dadurch gekennzeichnet ist, dass**

die Mehrträger-Konfigurationsnachricht ferner Informationen über die Ressourcenblock-Codierungsweise der ersten Träger umfasst; und Datenmultiplexen, Einkapselung, Übertragung und Decodierung unabhängig für Ressourcen auf verschiedenen ersten Trägern durchgeführt werden und Ressourcen auf einem selben ersten Träger für Datenmultiplexen, Einkapselung, Übertragung und Decodierung als ein Ganzes betrachtet werden.

**10.** Basisstation nach Anspruch 9, wobei in der durch die Mehrträger-Konfigurationseinheit (510) zu dem UE gesendeten Mehträger-Konfigurationsnachricht die Informationen über die mehreren ersten Träger Folgendes umfassen: Seriennummern der mehreren ersten Träger und die Seriennummer des zweiten Trägers, auf dem sich der PDCCH-Befehl zum Einteilen der mehreren ersten Träger befindet, und die Ressourcenblock-Codierungsweise darin besteht, dass die Ressourcenblöcke auf jedem Träger in den mehreren ersten Trägern sequenziell und getrennt codiert werden; und

in dem durch die Sendeeinheit (520) zu dem UE gesendeten PDCCH-Befehl die Angabeinformationen der für das UE verfügbaren Ressourcenblöcke einen Ressourcenblock-Startcode und die Anzahl der Ressourcenblöcke umfassen, so dass das UE die Ressourcen auf den mehreren ersten Trägern gemäß den Seriennummern der ersten Träger, dem Ressourcenblock-Startcode und der Anzahl der Ressourcenblöcke einteilt, wobei die Ressourcen durch den Ressourcenblock-Startcode und die Anzahl der Ressourcenblöcke definiert werden.

**11.** Basisstation nach Anspruch 9, wobei in der durch die Mehrträger-Konfigurationseinheit (510) zu dem UE gesendeten Mehrträger-Konfigurationsnachricht die Ressourcenblock-Codierungsweise darin besteht, dass die Ressourcenblöcke auf den ersten Trägern gemäß der Anzahl der ersten Träger und einer vordefinierten Ressourcenblock-Gruppengröße zu mehreren Ressourcenblockgruppen gruppiert werden, wobei die Ressourcenblockgruppen einen Ressourcenblock auf einem ersten Träger und/oder einen Ressourcenblock auf einem benachbarten ersten Träger umfassen; und

in dem durch die Sendeeinheit (520) zu dem UE gesendeten PDCCH-Befehl die Angabeinformationen der für das UE verfügbaren Ressourcenblöcke eine Bitmap umfassen, wobei die Bitmap die für das UE verfügbaren Ressourcenblockgruppen angibt.

**12.** Basisstation nach einem der Ansprüche 9 bis 11, wobei

die durch die Mehrträger-Konfigurationseinheit (510) zu dem UE gesendete Mehrträger-Konfigurationsnachricht eine Mehrträgereinteilungsfreigabe-/-sperrangabe umfasst und falls die Mehrträgereinteilungsfreigabe-/-sperrangabe auf Freigabe gesetzt ist, dem UE erlaubt ist, Mehrträgereinteilung durchzuführen.

**13.** Benutzergerät, umfassend:

eine Empfangseinheit (610), ausgelegt zum Empfangen einer durch eine Basisstation gesendeten Mehrträger-Konfigurationsnachricht, wobei die Mehrträger-Konfigurationsnachricht Informationen über mehrere erste Träger umfasst, die durch einen "Physical Downlink Control Channel"- bzw. PDCCH-Befehl eingeteilt werden;

eine Einteilungseinheit (620), ausgelegt zum Empfangen des durch die Basisstation über einen zweiten Träger gesendeten PDCCH-Befehls, wobei der PDCCH-Befehl Angabeinformationen von für ein Benutzergerät UE verfügbaren Ressourcenblöcken umfasst; und die Einteilungseinheit (620) ferner ausgelegt ist zum Einteilen von Betriebsmitteln auf den mehreren ersten Trägern gemäß den Informationen über die mehreren ersten Träger, einer Ressourcenblock-Codierungsweise und den Angabeinformationen;

und das Benutzergerät **dadurch gekennzeichnet ist, dass**

die Mehrträger-Konfigurationsnachricht ferner Informationen über die Ressourcenblock-Codierungsweise der ersten Träger umfasst; und Datenmultiplexen, Einkapselung, Übertragung und Decodierung unabhängig für Ressourcen auf verschiedenen ersten Trägern durchgeführt werden und Ressourcen auf einem selben ersten Träger für Datenmultiplexen, Einkapselung, Übertragung und Decodierung als ein Ganzes betrachtet werden.

**14.** Benutzergerät nach Anspruch 13, wobei in der durch die Basisstation gesendeten und durch die Empfangseinheit (610) empfangenen Mehrträger-Konfigurationsnachricht die Informationen über die mehreren ersten Träger Folgendes umfassen: Seriennummern der mehreren ersten Träger und eine Seriennummer des zweiten Trägers, auf dem sich der PDCCH-Befehl zum Einteilen der mehreren ersten Träger befindet, und die Ressourcenblock-Codierungsweise darin besteht, dass die Ressourcenblöcke auf jedem Träger in den mehreren ersten Trägern sequenziell und getrennt codiert werden; und

in dem durch die Basisstation gesendeten und durch die Einteilungseinheit (620) empfangenen PDCCH-Befehl die Angabeinformationen der für das UE verfügbaren Ressourcenblöcke einen Ressourcenblock-Startcode und die Anzahl der Ressourcenblöcke umfassen; und die Einteilungseinheit (620) ferner ausgelegt ist zum Einteilen der Ressourcen auf den mehreren ersten Trägern gemäß den Seriennummern der ersten Träger, dem Ressourcenblock-Startcode und der Anzahl der Ressourcenblöcke, wobei die Ressoucen durch den Ressourcenblock-Startcode und die Anzahl der Ressourcenblöcke definiert werden.

**15.** Benutzergerät nach Anspruch 13, wobei

in der durch die Basisstation gesendeten und durch die Empfangseinheit (610) empfangenen Mehrträger-Konfigurationsnachricht die Ressourcenblock-Codierungsweise darin besteht, dass die Ressourcenblöcke auf den ersten Trägern gemäß der Anzahl der ersten Träger und einer vordefinierten Ressourcenblock-Gruppengröße zu mehreren Ressourcenblockgruppen gruppiert werden, wobei die Ressourcenblockgruppen einen Ressourcenblock auf einem ersten Träger und/oder einen Ressourcenblock auf einem benachbarten ersten Träger umfassen; und in dem durch die Basisstation gesendeten und durch die Einteilungseinheit (620) empfangenen PDCCH-Befehl die Angabeinformationen der für das UE verfügbaren Ressourcenblöcke eine Bitmap umfassen, wobei die Bitmap die für das UE verfügbaren Ressourcenblockgruppen angibt.

16. Benutzergerät nach einem der Ansprüche 13 bis 15, wobei die durch die Basisstation gesendete und durch die Empfangseinheit (610) empfangene Mehrträger-Konfigurationsnachricht eine Mehrträgereinteilungsfreigabe-/-sperrangabe umfasst und falls die Mehrträgereinteilungsfreigabe-/- sperrangabe auf Freigabe gesetzt ist, dem UE erlaubt ist, Mehrträgereinteilung durchzuführen.

**Revendications**

1. Procédé pour une station de base pour une planification de multiporteuses, comprenant les étapes suivantes :

    envoyer (110) un message de configuration de multiporteuses à un équipement d'utilisateur, UE, où le message de configuration de multiporteuses comprend des informations concernant de multiples premières porteuses planifiées par une commande de canal physique de contrôle de liaison descendante, PDCCH ; et envoyer (120) la commande de PDCCH à l'UE sur une seconde porteuse, où la commande de PDCCH comprend des informations d'indication de blocs de ressources disponibles pour l'UE, de manière à ce que l'UE planifie des ressources sur les multiples premières porteuses conformément aux informations concernant les multiples premières porteuses, à une manière de coder les blocs de ressources, et aux informations d'indication ;

    et le procédé est **caractérisé en ce que**

    le message de configuration de multiporteuses comprend en outre des informations concernant la manière de coder les blocs de ressources des premières porteuses ; et

le décodage, la transmission, l'encapsulation et le multiplexage de données sont exécutés de manière indépendante pour des ressources sur différentes premières porteuses, et des ressources sur une même première porteuse sont considérées comme un tout pour le décodage, la transmission, l'encapsulation et le multiplexage de données.

2. Procédé selon la revendication 1, dans lequel :

    dans le message de configuration de multiporteuses envoyé à l'UE, les informations concernant les multiples premières porteuses comprennent : des numéros de série des multiples premières porteuses et le numéro de série de la seconde porteuse sur laquelle la commande de PDCCH pour planifier les multiples premières porteuses est située, et la manière de coder les blocs de ressources consiste en ce que les blocs de ressources sur chaque porteuse dans les multiples premières porteuses sont codés de manière séquentielle et séparée ; et dans la commande de PDCCH envoyée à l'UE, les informations d'indication des blocs de ressources disponibles pour l'UE comprennent un code de démarrage de bloc de ressources et le nombre des blocs de ressources, de manière à ce que l'UE planifie les ressources sur les multiples premières porteuses conformément aux numéros de série des premières porteuses, au code de démarrage de bloc de ressources, et au nombre des blocs de ressources, où les ressources sont définies par le code de démarrage de bloc de ressources et le nombre des blocs de ressources.

3. Procédé selon la revendication 1, dans lequel :

    dans le message de configuration de multiporteuses envoyé à l'UE, la manière de coder les blocs de ressources consiste en ce que : les blocs de ressources sur les premières porteuses sont groupés en de multiples groupes de blocs de ressources conformément au nombre des premières porteuses et à une taille de groupe de blocs de ressources prédéfinie, où les groupes de blocs de ressources comprennent un bloc de ressources sur une première porteuse et/ou un bloc de ressources sur une première porteuse avoisinante ; et dans la commande de PDCCH envoyée à l'UE, les informations d'indication des blocs de ressources disponibles pour l'UE comprennent un bitmap, où le bitmap indique les groupes de blocs de ressources disponibles pour l'UE.

4. Procédé selon l'une quelconque des revendications 1 à 3, dans lequel :

le message de configuration de multiporteuses envoyé à l'UE comprend une indication d'activation/de désactivation de la planification de multiporteuses, et dans le cas où l'indication d'activation/de désactivation de la planification de multiporteuses est programmée pour l'activation, l'UE est autorisé à exécuter une planification de multiporteuses.

5. Procédé pour un équipement d'utilisateur pour une planification de multiporteuses, comprenant les étapes suivantes :

recevoir un message de configuration de multiporteuses envoyé par une station de base, où le message de configuration de multiporteuses comprend des informations concernant de multiples premières porteuses planifiées par une commande de canal physique de contrôle de liaison descendante, PDCCH ;
recevoir la commande de PDCCH envoyée par la station de base sur une seconde porteuse, où la commande de PDCCH comprend des informations d'indication de blocs de ressources disponibles pour un équipement d'utilisateur, UE ; et
planifier des ressources sur les multiples premières porteuses conformément aux informations concernant les multiples premières porteuses, à une manière de coder les blocs de ressources, et aux informations d'indication ;

et le procédé est **caractérisé en ce que**

le message de configuration de multiporteuses comprend en outre des informations concernant la manière de coder les blocs de ressources des premières porteuses ; et
le décodage, la transmission, l'encapsulation et le multiplexage de données sont exécutés de manière indépendante pour des ressources sur différentes premières porteuses, et des ressources sur une même première porteuse sont considérées comme un tout pour le décodage, la transmission, l'encapsulation et le multiplexage de données.

6. Procédé selon la revendication 5, dans lequel :

dans le message de configuration de multiporteuses, les informations concernant les multiples premières porteuses comprennent : des numéros de série des multiples premières porteuses et un numéro de série de la seconde porteuse sur laquelle la commande de PDCCH pour planifier les multiples premières porteuses est située, et
la manière de coder les blocs de ressources consiste en ce que les blocs de ressources sur chaque porteuse parmi les multiples premières porteuses sont codés de manière séquentielle et séparée ; et
dans la commande de PDCCH, les informations d'indication des blocs de ressources disponibles pour l'UE comprennent un code de démarrage de bloc de ressources et le nombre des blocs de ressources ; et
la planification des ressources sur les multiples premières porteuses conformément aux informations concernant les multiples premières porteuses, la manière de coder les blocs de ressources, et les informations d'indication, comprend l'étape suivante : planifier les ressources sur les multiples premières porteuses conformément aux numéros de série des multiples premières porteuses, au code de démarrage de bloc de ressources, et au nombre des blocs de ressources, où les ressources sont définies par le code de démarrage de bloc de ressources et le nombre des blocs de ressources.

7. Procédé selon la revendication 5, dans lequel :

dans le message de configuration de multiporteuses, la manière de coder les blocs de ressources consiste en ce que : les blocs de ressources sur les premières porteuses sont groupés en de multiples groupes de blocs de ressources conformément au nombre des premières porteuses et à une taille de groupe de blocs de ressources prédéfinie, où les groupes de blocs de ressources comprennent un bloc de ressources sur une première porteuse et/ou un bloc de ressources sur une première porteuse avoisinante ; et
les informations d'indication des blocs de ressources disponibles pour l'UE comprennent un bitmap, où le bitmap indique les groupes de blocs de ressources disponibles pour l'UE.

8. Procédé selon la revendication 5, dans lequel :

le message de configuration de multiporteuses comprend une indication d'activation/de désactivation de la planification de multiporteuses, et dans le cas où l'indication d'activation/de désactivation de la planification de multiporteuses est programmée pour l'activation, l'UE est autorisé à exécuter une planification de multiporteuses.

9. Station de base comprenant :

une unité de configuration de multiporteuses (510), configurée pour envoyer un message de configuration de multiporteuses à un équipement d'utilisateur, UE, où le message de configuration de multiporteuses comprend des information concernant de multiples premières porteuses planifiées par une commande de canal physique de contrôle de liaison descendante, PDCCH ; et
une unité d'envoi (520) configurée pour envoyer la commande de PDCCH à l'UE sur une seconde porteuse, où la commande de PDCCH comprend des informations d'indication de blocs de ressources disponibles pour l'UE, de manière à ce que l'UE planifie des ressources sur les premières porteuses conformément aux informations concernant les multiples premières porteuses, à une manière de coder les blocs de ressources, et aux informations d'indication ;

et la station de base est **caractérisée en ce que**

le message de configuration de multiporteuses comprend en outre des informations concernant la manière de coder les blocs de ressources des premières porteuses ; et
le décodage, la transmission, l'encapsulation et le multiplexage de données sont exécutés de manière indépendante pour des ressources sur différentes premières porteuses, et des ressources sur une même première porteuse sont considérées comme un tout pour le décodage, la transmission, l'encapsulation et le multiplexage de données.

10. Station de base selon la revendication 9, dans laquelle :

dans le message de configuration de multiporteuses envoyé par l'unité de configuration de multiporteuses (510) à l'UE, les informations concernant les premières porteuses comprennent : des numéros de série des multiples premières porteuses et un numéro de série de la seconde porteuse sur laquelle la commande de PDCCH pour planifier les multiples premières porteuses est située, et la manière de coder les blocs de ressources consiste en ce que les blocs de ressources sur chaque de porteuse parmi les multiples premières porteuses sont codés de manière séquentielle et séparée ; et
dans la commande de PDCCH envoyée par l'unité d'envoi (520) à l'UE, les informations d'indication des blocs de ressources disponibles pour l'UE comprennent un code de démarrage de bloc de ressources et le nombre des blocs de ressources, de manière à ce que l'UE planifie les ressources sur les multiples premières porteuses, où les ressources sont définies par le code de démarrage de bloc de ressources et le nombre des blocs de ressources.

11. Station de base selon la revendication 9, dans laquelle :

dans le message de configuration de multiporteuses envoyé par l'unité de configuration de multiporteuses (510) à l'UE, la manière de coder les blocs de ressources des premières porteuses consiste en ce que : les blocs de ressources sur les premières porteuses sont groupés en de multiples groupes de blocs de ressources conformément au nombre des premières porteuses et à une taille de groupe de blocs de ressources prédéfinie, où les groupes de blocs de ressources comprennent un bloc de ressources sur une première porteuse et/ou un bloc de ressources sur une première porteuse avoisinante ; et
dans la commande de PDCCH envoyée par l'unité d'envoi (520) à l'UE, les informations d'indication des blocs de ressources disponibles pour l'UE comprennent un bitmap, où le bitmap indique les groupes de blocs de ressources disponibles pour l'UE.

12. Station de base selon l'une quelconque des revendications 9 à 11, dans laquelle :

le message de configuration de multiporteuses envoyé par l'unité de configuration de multiporteuses (510) à l'UE comprend une indication d'activation/de désactivation de la planification de multiporteuses, où dans le cas où l'indication d'activation/de désactivation de la planification de multiporteuses est programmée pour l'activation, l'UE est autorisé à exécuter une planification de multiporteuses.

13. Équipement d'utilisateur, comprenant :

une unité de réception (610), configurée pour recevoir un message de configuration de multiporteuses envoyé par une station de base, où le message de configuration de multiporteuses comprend des informations concernant de multiples premières porteuses planifiées par une commande de canal physique de contrôle de liaison descendante, PDCCH ; et
une unité de planification (620), configurée pour recevoir la commande de PDCCH envoyée par la station de base sur une seconde porteuse, où la commande de PDCCH comprend des informations d'indication de blocs de ressources disponibles pour un équipement d'utilisateur, UE, et l'unité de planification (620) est en outre configurée pour planifier des ressources sur les multiples premières porteuses conformément aux informations concernant les multiples premières porteuses, à une manière de coder les blocs de ressources, et aux informations d'indication ;

et l'équipement d'utilisateur est **caractérisé en ce que**

le message de configuration de multiporteuses comprend en outre des informations concernant la manière de coder les blocs de ressources des premières porteuses ; et
le décodage, la transmission, l'encapsulation et le multiplexage de données sont exécutés de manière indépendante pour des ressources sur différentes premières porteuses, et des ressources sur une même première porteuse sont considérées comme un tout pour le décodage, la transmission, l'encapsulation et le multiplexage de données.

14. Équipement d'utilisateur selon la revendication 13, dans lequel :

dans le message de configuration de multiporteuses envoyé par la station de base et reçu par l'unité de réception (610), les informations concernant les premières porteuses comprennent : des numéros de série des multiples premières porteuses et un numéro de série de la seconde porteuse sur laquelle la commande de PDCCH pour planifier les multiples premières porteuses est située, et la manière de coder les blocs de ressources des premières porteuses consiste en ce que les blocs de ressources sur chaque porteuse parmi les multiples premières porteuses sont codés de manière séquentielle et séparée ; et
dans la commande de PDCCH envoyée par la station de base et reçue par l'unité de planification (620), les informations d'indication des blocs de ressources disponibles pour l'UE comprennent un code de démarrage de bloc de ressources et le nombre des blocs de ressources, et l'unité de planification (620) est en outre configurée pour planifier les ressources sur les multiples premières porteuses conformément aux numéros de série des premières porteuses, au code de démarrage de bloc de ressources, et au nombre des blocs de ressources, où les ressources sont définies par le code de démarrage de bloc de ressources et le nombre des blocs de ressources.

15. Équipement d'utilisateur selon la revendication 13, dans lequel :

dans le message de configuration de multiporteuses envoyé par la station de base et reçu par l'unité de réception (610), la manière de coder les blocs de ressources consiste en ce que : les blocs de ressources sur les premières porteuses sont groupés en de multiples groupes de blocs de ressources conformément au nombre des premières porteuses et à une taille de groupe de blocs de ressources prédéfinie, où les groupes de blocs de ressources comprennent un bloc de ressources sur une première porteuse et/ou un bloc de ressources sur une première porteuse avoisinante ; et
dans la commande de PDCCH envoyée par la station de base et reçue par l'unité de planification (620), les informations d'indication des blocs de ressources disponibles pour l'UE comprennent un bitmap, où le bitmap indique les groupes de blocs de ressources disponibles pour l'UE.

16. Équipement d'utilisateur selon l'une quelconque des revendications 13 à 15, dans lequel :

le message de configuration de multiporteuses envoyé par la station de base et reçu par l'unité de réception (610) comprend une indication d'activation/de désactivation de la planification de multiporteuses, et dans le cas où l'indication d'activation/de désactivation de la planification de multiporteuses est programmée sur l'activation, l'UE est autorisé à exécuter une planification de multiporteuses.

100

Send a multicarrier configuration message to a UE, where the multicarrier configuration message includes information about multiple first carriers scheduled by using a PDCCH command and information about a resource block encoding manner of the first carriers    ⌒ 110

Send the PDCCH command to the UE over a second carrier, where the PDCCH command includes indication information of a resource block available for the UE, so that the UE schedules resources on the multiple first carriers according to the information about the multiple first carriers, the resource block encoding manner, and the indication information    ⌒ 120

FIG. 1

Index (Index)=0

CC1

RB Start (Start)=5

RB

L=10

RB Index (Index)=24

RB Index (Index)=0

CC3

RB Start (Start)=5

RB

L=10

RB Index (Index)=24

FIG. 2

RB Index (Index)=0

CC1

RB Start (Start)=20

RB

L=10

CC2

FIG. 3

BitMap (BitMap)

CC1

0

RBG

1

CC2

0

FIG. 4

500

Multicarrier
configuration unit 510

Sending unit 520

FIG. 5

FIG. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2009154530 A1